# EUROPÄISCHE PATENTANMELDUNG

(11) **EP 4 528 134 A1**
(43) Veröffentlichungstag der Anmeldung: **26.03.2025**
(21) Anmeldenummer: 24194004.8
(22) Anmeldetag: 12.08.2024
(51) Int. Cl.: F16K 7/12, F16K 27/02

(54) **MEMBRANVENTIL, ANTRIEBSKOMPONENTE, UND VERFAHREN ZUR MONTAGE UND DEMONTAGE EINER VENTILMEMBRAN**

(30) Priorität: 21.09.2023 DE 102023125674
(71) Anmelder: Gemü Gebr. Müller Apparatebau GmbH & Co. Kommanditgesellschaft, 74653 Ingelfingen (DE)
(72) Erfinder: Haidt, Harald, 74613 Öhringen (DE); Tschernowsky, Tobias, 74653 Ingelfingen (DE)
(74) Vertreter: DREISS Patentanwälte PartG mbB

(57) **Zusammenfassung**

Es wird eine entlang einer gedachten Stellachse (S) eines zum Stellen eines Prozessfluids ausgebildeten Membranventils bewegbare Antriebskomponente mit einem Durchgang (220) bereitgestellt, wobei, insbesondere zur Hindurchführung eines Kopfes (130) wenigstens eines Membranstifts (120) einer Ventilmembran (100) durch den Durchgang (220) während einer Montage oder einer Demontage der Ventilmembran (100), eine Innenkontur (230) des Durchgangs (220) parallel zu einem von der Stellachse (S) abweichenden Montagepfad (M) verläuft.

## Beschreibung

Die Erfindung betrifft ein Membranventil, eine Antriebskomponente, und Verfahren zur Montage und Demontage einer Ventilmembran.

Es ist bekannt, in einen Membranstift einen Querstift einzubringen, um mittels des Querstifts eine kraftführende Verbindung zu einer Ventilstange herzustellen. Andere bekannte Ausführungen betreffen Membranstifte mit einem Außengewinde, welches in ein entsprechendes Innengewinde eingedreht wird, um eine kraftführende Verbindung zur Ventilstange herzustellen.

Die Probleme des Standes der Technik werden durch ein Membranventil gemäß dem Anspruch 1, durch eine Antriebskomponente des Membranventils gemäß einem weiteren unabhängigen Anspruch, sowie durch Verfahren zur Montage und Demontage einer Ventilmembran gemäß jeweiligen unabhängigen Ansprüchen gelöst.

Ein Aspekt der Beschreibung betrifft den folgenden Gegenstand: Ein Membranventil umfassend: eine Ventilmembran mit einem Membranhauptkörper und wenigstens einem von dem Membranhauptkörper abragenden Membranstift, wobei der Membranstift einen Kopf und einen sich vom Kopf in Richtung des Membranhauptkörpers erstreckenden Hals umfasst; und eine entlang einer gedachten Stellachse des Membranventils bewegbare Antriebskomponente mit einem Durchgang, wobei, insbesondere zur Hindurchführung des Kopfes des wenigstens einen Membranstifts durch den Durchgang während einer Montage oder einer Demontage der Ventilmembran, wenigstens eine erste Innenkontur des Durchgangs zumindest abschnittsweise parallel zu einem von der Stellachse abweichenden Montagepfad verläuft.

Vorteilhaft wird sowohl die Konstruktion der lösbaren Verbindung zwischen Ventilmembran und Antrieb vereinfacht. Im gleichen Zuge wird die Funktion der Verbindung verbessert, da neben dem insbesondere einstückig ausgebildeten, in der Membran festgelegten Membranstift außer der vorgeschlagenen Konturierung der Antriebskomponente keine weiteren Bauteile notwendig sind, um die Ventilmembran für die Demontage lösbar mit dem Antrieb zu verbinden. Es wird damit eine montagefreundliche, einknüpfbare Ventilmembran bereitgestellt.

Weitergehend ergeben sich Vorteile bei der Montage, da eine von einer symmetrischen, insbesondere rotationssymmetrischen Ausprägung des Membranhauptkörpers der Membran abweichende Bewegung durchgeführt werden muss, um die Montage oder Demontage vorzunehmen. Insbesondere muss die Ventilmembran so zum Antrieb und der Antriebskomponente orientiert werden, dass der Membranstift im Wesentlichen entlang des Montagepfads angeordnet ist, um die Montage oder Demontage vorzunehmen. Für den Monteur ergibt sich so eine einfach zu merkende und haptisch vorteilhafte Montage und Demontage.

Gemäß einem vorteilhaften Beispiel verläuft, insbesondere zur Aufnahme des Halses innerhalb des Durchgangs während eines betriebsbereiten Zustandes der Ventilmembran, wenigstens eine zweite Innenkontur des Durchgangs parallel zur Stellachse.

Dadurch verbessert sich die Führung des Membranstifts entlang der Stellachse, insbesondere beim Abheben der Ventilmembran vom Sitz. Es wird also die Funktion der Verbindung verbessert, da neben dem insbesondere einstückig ausgebildeten, in der Membran festgelegten Membranstift außer der vorgeschlagenen Konturierung der Antriebskomponente keine weiteren Bauteile notwendig sind, um die Ventilmembran im Betrieb sicher mit dem Antrieb zu verbinden. Es wird damit die montagefreundliche, einknüpfbare Ventilmembran bereitgestellt.

Ein vorteilhaftes Beispiel zeichnet sich dadurch aus, dass bei einem Montagevorgang der Ventilmembran der Kopf des Membranstifts entlang der ersten Innenkontur des Durchgangs durch den Durchgang hindurch führbar ist, wobei bei dem Montagevorgang der Ventilmembran der Hals des Membranstiftes nach einem Austreten des Kopfes des Membranstiftes aus dem Durchgang in Richtung der zweiten Innenkontur verschwenkbar ist, insbesondere aus der Montagesachse heraus in Richtung der Stellachse verschwenkbar ist.

Vorteilhaft ermöglichen die ersten und zweiten Innenkonturen die Schrägführung für die Montage und die Verschwenkung des Membranpins in die Stellachse.

Ein vorteilhaftes Beispiel zeichnet sich dadurch aus, dass die Antriebskomponente ein Kompressor oder ein Druckstück ist, wobei die Antriebskomponente wenigstens eine der Ventilmembran zugewandte Kontaktfläche aufweist, welche zu einem Schließen des Membranventils die Ventilmembran in Richtung eines feststehenden Ventilsitzes eines Ventilkörpers drückt.

Vorteilhaft lässt sich also die vorgeschlagene zur Verbindung von Membran und Antrieb vorgesehene Antriebskomponente mit der weiteren Funktion also Kompressor oder Druckstück nutzen.

Ein vorteilhaftes Beispiel zeichnet sich dadurch aus, dass das Membranventil umfasst: einen zu einer Bewegung der Antriebskomponente entlang der Stellachse eingerichteten Antrieb, wobei der Antrieb zur Montage oder Demontage der Ventilmembran die Antriebskomponente in eine Montageposition bewegt.

Durch die Vorgabe einer definierten Montageposition durch den Antrieb wird die Montage dahingehend vereinfacht, als dass der Monteur stets die gleiche Ausgangslage zur Montage und Demontage vorfindet. Fehlbedienungen und Fehleinbauten werden damit verhindert.

Ein vorteilhaftes Beispiel zeichnet sich dadurch aus, dass die Montageposition der Antriebskomponente mit einer geöffneten Position des Membranventils korrespondiert.

Vorteilhaft ist die geöffnete Position des Membranventils über eine Reihe von Antriebsarten, wie beispielsweise Pneumatik antrieben, Handantrieben oder Elektroantrieben, hinweg eine Position, die durch den Antrieb stets angefahren werden kann. Folglich ist die vorgestellte Montageart für Ventilmembrane vorteilhaft für viele Antriebsarten nutzbar und für den Monteur einfach verständlich.

Im Falle der gewählten Öffnungsposition des Membranventils und der hierzu korrespondierenden Montageposition der Antriebskomponente ist die Ventilmembran in Ihrer geöffneten Position gefertigt. Das bedeutet, dass die Kontur der hergestellten Membran im unbelasteten Zustand im Wesentlichen der geöffneten Position entspricht oder nahe an dieser korrespondierenden Konturierung liegt. Damit lässt sich die Membran zwar unter Verformung durch die die Öffnungsposition der Ventilmembran begrenzenden Teile des Membranventils einbringen, es ergeben sich jedoch Vorteile bei der Herstellung der Dichtheit nach außen, da die Ventilmembran in einem im Wesentlichen unbelasteten Zustand verklemmt wird.

Ein vorteilhaftes Beispiel zeichnet sich dadurch aus, dass das Membranventil umfasst: einen Ventilkörper mit wenigstens einem Ventilsitz, welcher gemeinsam mit der Ventilmembran und deren Stellung einen wirksamen Durchfluss eines entlang einer Hauptflussrichtung fließenden Prozessfluids durch das Membranventil begrenzt; wobei der Montagepfad außerhalb einer gedachten Ebene verläuft, welche die Hauptflussrichtung und die Stellachse miteinander aufspannen.

So wird wirksam verhindert, dass es durch Druckstöße im Prozessfluids oder durch im Raum zwischen Ventilmembran und Ventilsitz vorhandene Störkörper dazu kommt, dass die Verbindung zwischen der Antriebskomponente und dem Membranstift negativ beeinflusst wird und es beispielsweise zu einem Verkeilen der Komponenten kommt.

Ein vorteilhaftes Beispiel zeichnet sich dadurch aus, dass der stegartige und abschnittsweise gekrümmt verlaufende Ventilsitz und der Montagepfad in einer gemeinsamen gedachten Ebene liegen.

Vorteilhaft steht damit der Montagepfad lotrecht zur Hauptflussrichtung des Prozessfluids, womit die Einflüsse des auf die Ventilmembran drückenden Prozessfluids auf die Verbindung zwischen der Antriebskomponente und dem Membranstift reduziert werden.

Ein vorteilhaftes Beispiel zeichnet sich dadurch aus, dass ein erster Abschnitt der zweiten Innenkontur im betriebsbereiten Zustand der Ventilmembran eine Führung für einen gegenüber dem Kopf des Membranstiftes verjüngten Abschnitt des Halses des Membranstiftes bereitstellt, wobei ein zweiter Abschnitt der zweiten Innenkontur im betriebsbereiten Zustand der Ventilmembran eine Führung für einen gegenüber dem verjüngten Abschnitt des Halses aufgeweiteten Abschnitt des Halses des Membranstifts bereitstellt.

Vorteilhaft wird durch diese gestufte Form des Halses die Führung des Membranstiftes innerhalb der Antriebskomponente verbessert, insbesondere da die beiden Abschnitte der ersten Innenkontur voneinander abgesetzt sind und den unterschiedlichen Querschnitten des verjüngten und aufgeweiteten Abschnitts des Halses eine Führung bereitstellen.

Ein vorteilhaftes Beispiel zeichnet sich dadurch aus, dass eine parallel zur Stellachse verlaufende Länge des verjüngten Abschnitts größer ist als ein Abstand zwischen einer proximalen Öffnung des Durchgangs und dem ersten Abschnitt der zweiten Innenkontur.

Vorteilhaft kann sich damit der Ventilstift innerhalb der Antriebskomponente bewegen, womit ein Aufdrücken der Antriebskomponente auf die Membran spielbehaftet ist und hierbei die der Membran zugewandten Kompressionsflächen wirksam sind. Wir die Membran hingegen vom Sitz weggezogen, so wird die hierfür erforderliche Zugkraft über einen Bereich nahe der proximalen Öffnung auf den Ventilstift übertragen.

Ein vorteilhaftes Beispiel zeichnet sich dadurch aus, dass die erste Innenkontur zumindest abschnittsweise einer gedachten Innenzylindermantelfläche eines gedachten Zylinders mit dem Montagepfad als Zylinderachse folgt, wobei die zweite Innenkontur zumindest abschnittsweise einer gedachten Innenzylindermantelfläche eines gedachten Zylinders mit der Stellachse als Zylinderachse folgt.

Vorteilhaft kann damit ein teilweise gedrehter Membranstift verwendet werden, was die Herstellung zum einen vereinfacht und zum anderen die Stabilität des Membranstifts und damit die Betriebsbedingungen des Ventils verbessert.

Vorteilhaft ergibt sich durch die gewählte Zylinderform eine montagefreundliche Handhabung, da die Zylinderform Verdrehungen der beiden Komponenten gegeneinander erlaubt.

Ein vorteilhaftes Beispiel zeichnet sich dadurch aus, dass ein zu einer Mittenlängsachse des Membranstiftes lotrechter Außenquerschnitt des Kopfes des Membranstiftes derart auf einen mit der ersten Innenkontur assoziierten Innenquerschnitt der Durchgangsöffnung der Antriebskomponente abgestimmt ist, so dass der Kopf entlang des Montagepfads durch die Durchgangsöffnung führbar ist, wobei ein zu der Mittenlängsachse des Membranstiftes lotrecht verlaufender Außenquerschnitt des Halses derart auf wenigstens einen mit der zweiten Innenkontur assoziierten Innenquerschnitt der Durchgangsöffnung abgestimmt ist, so dass der Hals des Membranstiftes entlang der Stellachse in der Durchgangsöffnung aufnehmbar ist.

Vorteilhaft lässt sich damit die Verschwenkung des Membranstifts erreichen.

Ein vorteilhaftes Beispiel zeichnet sich dadurch aus, dass der Kopf wenigstens eine Einführschräge aufweist, welche beim Einführen des Kopfes in den Durchgang auf einen Übergangsbereich zwischen der ersten Innenkontur und der zweiten Innenkontur trifft und dadurch eine Verschwenkung des Membranstiftes in Richtung des Montagepfads bewirkt.

Vorteilhaft tragen der Übergangsbereich und die Einführschräge des Membranstiftes dabei, die Montage haptisch zu unterstützen. Die Montagefreundlichkeit wird folglich verbessert.

Ein vorteilhaftes Beispiel zeichnet sich dadurch aus, dass die Ventilmembran und eine die um die Antriebskomponente herum angeordnete Komponente eine jeweilige Kodierung aufweisen, welche den Verlauf des Montagepfads indiziert, wobei eine Führung der Antriebskomponente deren Rotationsposition in Bezug zur Stellachse eindeutig festlegt.

Vorteilhaft wird hierdurch kompensiert, dass der Verlauf des Montagepfads insbesondere bei montierter Membran, die demontiert werden soll, bei einer Draufsicht auf die Membran nicht sichtbar ist. Die Kodierung erhöht also die Montagefreundlichkeit.

Ein zweiter Aspekt der Beschreibung betrifft den folgenden Gegenstand: Eine entlang einer gedachten Stellachse eines Membranventils bewegbare Antriebskomponente mit einem Durchgang wobei, insbesondere zur Hindurchführung eines Kopfes wenigstens eines Membranstifts einer Ventilmembran durch den Durchgang während einer Montage oder einer Demontage der Ventilmembran, eine erste Innenkontur des Durchgangs parallel zu einem von der Stellachse abweichenden Montagepfad verläuft, und wobei, insbesondere zur Aufnahme eines Halses des Membranstiftes innerhalb des Durchgangs während eines betriebsbereiten Zustandes der Ventilmembran, eine zweite Innenkontur des Durchgangs parallel zur Stellachse verläuft.

Ein dritter Aspekt der Beschreibung betrifft den folgenden Gegenstand: Ein Montage-Verfahren zum Anordnen einer Ventilmembran eines Membranventils umfassend Einführen eines Kopfes eines von einem Membranhauptkörper der Ventilmembran abragenden Membranstiftes in eine Öffnung einer entlang einer Stellachse des Membranventils beweglichen Antriebskomponente, wobei die Öffnung in einen wenigstens abschnittsweise entlang eines Montagepfads verlaufenden Durchgang der Antriebskomponente führt, und wobei der Montagepfad abweichend zur Stellachse verläuft; Hindurchführen des Kopfes des Membranstiftes durch den Durchgang der Antriebskomponente in einer von der Membranseite der Antriebskomponente wegweisenden Montagerichtung, wobei eine Mittenlängsachse des Membranstiftes und der Montagepfad bei dem Hindurchführen wenigstens zeitweise zusammenfallen; und Verschwenken des Membranstiftes aus dem Montagepfad in die Stellachse, wobei bei dem Verschwenken ein sich vom Kopf des Membranstifts in Richtung Membranhauptkörper erstreckender Hals des Membranstifts in wenigstens einen Aufnahmeraum des Durchgangs eintaucht, und wobei nach dem Verschwenken des Membranstifts eine proximale Anlagefläche des Kopfes und eine Gegenfläche der Antriebskomponente so zueinander angeordnet sind, dass bei einer Bewegung der Antriebskomponente in eine Richtung entgegen der Ventilmembran die Gegenfläche und die Anlagefläche so aneinander liegen, dass mittels der Gegenfläche und mittels der Anlagefläche ein Zugmoment von der Antriebskomponente in den Membranstift eingebracht wird.

Ein vierter Aspekt der Beschreibung betrifft den folgenden Gegenstand: Ein Demontage-Verfahren zum Entfernen einer Ventilmembran von einem Membranventil das Verfahren umfassend: Verschwenken eines Membranstiftes, welcher von einem Membranhauptkörper der Ventilmembran abragt, aus einer Stellachse des Membranventils in den Montagepfad, wobei der Montagepfad abweichend zur Stellachse verläuft, wobei bei dem Verschwenken ein sich von einem Kopf des Membranstifts in Richtung Membranhauptkörper erstreckender Hals des Membranstifts zumindest abschnittsweise aus einem Aufnahmeraum des Durchgangs herausbewegt wird, und wobei nach dem Verschwenken des Membranstifts eine Anlagefläche des Kopfes und eine Gegenfläche der Antriebskomponente derart voneinander entkoppelt sind, so dass der Kopf durch den Durchgang hindurchgeführt werden kann; und Hindurchführen des Kopfes des Membranstiftes durch den Durchgang der Antriebskomponente in einer zu der Membranseite der Antriebskomponente hin weisenden Demontagerichtung, wobei eine Mittenlängsachse des Membranstiftes und der Montagepfad bei dem Hindurchführen wenigstens zeitweise zusammenfallen.

In der Zeichnung zeigen:
- Figur 1: ein schematisch dargestelltes Membranventil in einem Schnitt, in welchem eine Stellachse des Membranventils liegt;
- Figur 2: eine Antriebskomponente des Membranventils in einem Schnitt entlang der Stellachse;
- Figur 3: eine Ventilmembran in einer perspektivischen Darstellung;
- Figur 4: die Antriebskomponente in einer perspektivischen Darstellung;
- Figuren 5 bis 8: jeweils einen Zustand bei der Montage oder Demontage der Ventilmembran; und
- Figuren 9 und 10: jeweils ein schematisches Ablaufdiagramm zur Montage und Demontage der Ventilmembran.

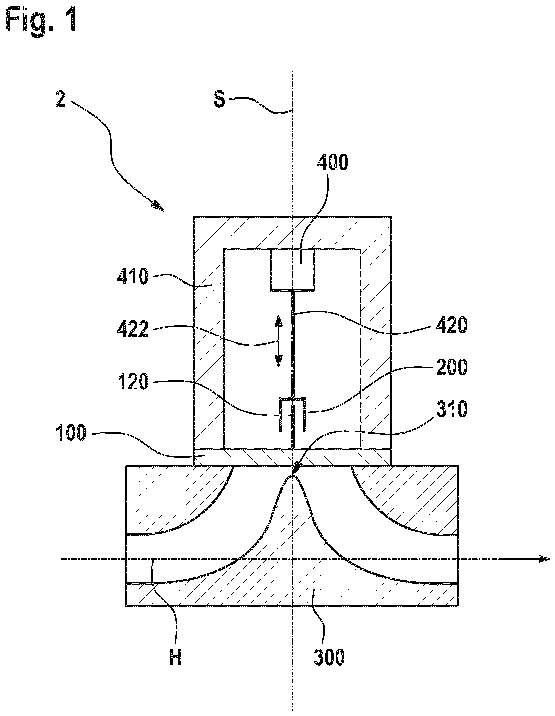

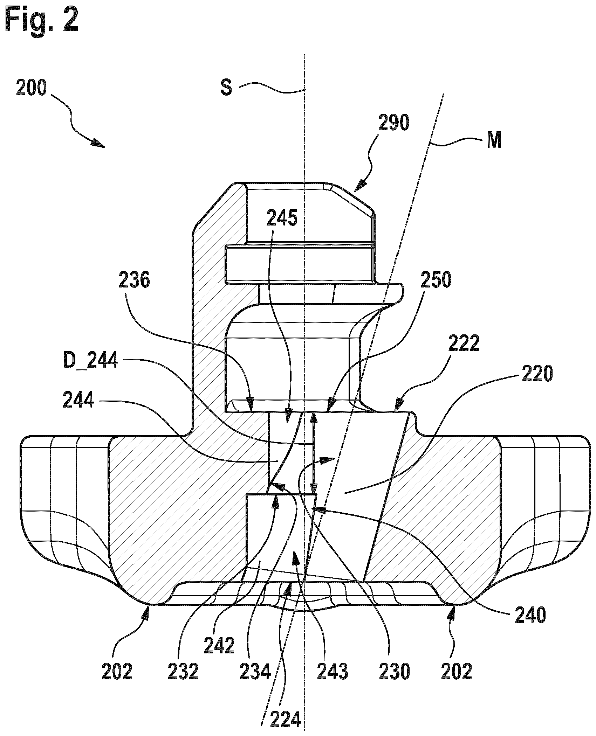

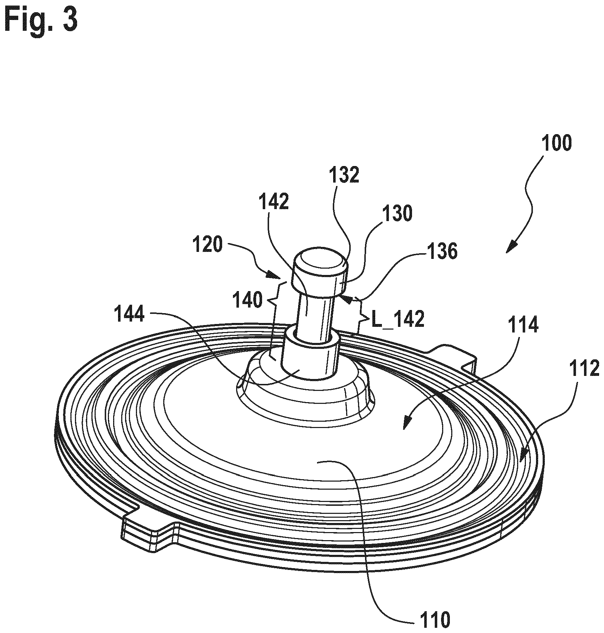

Figur 1 zeigt ein schematisch dargestelltes Membranventil 2 in einem Schnitt, in welchem eine Stellachse S des Membranventils 2 liegt. Figur 2 zeigt eine Antriebskomponente 200 des Membranventils 2 in einem Schnitt entlang der Stellachse S. Figur 3 zeigt eine Ventilmembran 100 für das Membranventil 2 in einer perspektivischen Darstellung. Im Folgenden wird auf die Figuren 1 bis 3 eingegangen.

Das Membranventil 2 umfasst wenigstens die Ventilmembran 100 und die Antriebskomponente 200. Die in Figur 3 gezeigte Ventilmembran 100 umfasst einen Membranhauptkörper 110 und wenigstens einen von dem Membranhauptkörper 110 abragenden Membranstift 120. Der Membranstift 120 umfasst einen Kopf 130 und einen sich vom Kopf 130 in Richtung des Membranhauptkörpers 110 erstreckenden und gegenüber dem Kopf 130 wenigstens abschnittsweise verjüngten Hals 140. Die entlang der gedachten Stellachse S des Membranventils 2 bewegbare Antriebskomponente 200 gemäß der Figur 2 umfasst einen Durchgang 220. Wenigstens eine erste Innenkontur 230 des Durchgangs 220 verläuft parallel zu einem von der Stellachse S verschiedenen Montagepfad M, insbesondere parallel zu einer zu der Stellachse S schräg gestellten Montageachse. Wenigstens eine zweite Innenkontur 240 des Durchgangs 220 verläuft parallel zur Stellachse S.

In den Figuren ist der Montagepfad M als Montageachse ausgebildet. Selbstverständlich kann der Montagepfad M auch abweichend von einer axialen Ausprägung leicht gekrümmt verlaufen, um beispielsweise die Montage oder Demontage zu vereinfachen.

Insbesondere zur Hindurchführung des Kopfes 130 des wenigstens einen Membranstifts 120 durch den Durchgang 220 während einer Montage oder einer Demontage der Ventilmembran 100 verläuft die wenigstens eine erste Innenkontur 230 des Durchgangs 220 parallel zum gedachten Montagepfad M, insbesondere zu der zu der Stellachse S schräg gestellten Montageachse M. Insbesondere zur Aufnahme des Halses 140 innerhalb des Durchgangs 220 während des betriebsbereiten Zustandes der Ventilmembran 100 verläuft die wenigstens eine zweite Innenkontur 240 des Durchgangs 220 parallel zur Stellachse S.

Der Montagepfad M und die Stellachse S schließen im Bereich des Durchgangs 220 beispielsweise einen kleinsten Winkel zwischen 5° und 25°, insbesondere einen Winkel zwischen 10° und 20°, insbesondere einen Winkel zwischen 12,5° und 17,5° miteinander ein.

Bei einem Montagevorgang der Ventilmembran 100 wird der Kopf 130 des Membranstifts 120 entlang der ersten Innenkontur 230 des Durchgangs 220 durch den Durchgang 220 hindurch geführt. Bei dem Montagevorgang der Ventilmembran 100 ist der Hals 140 des Membranstiftes 120 nach einem Austreten des Kopfes 130 des Membranstiftes 120 aus dem Durchgang 220 in Richtung der zweiten Innenkontur 240 verschwenkbar. Der Hals 140 und damit der gesamte Membranstift 120 wird mitsamt dem Membranhauptkörper 110 aus der Montagesachse M heraus in Richtung der Stellachse S verschwenkt. Im Betrieb des Membranventils ist der laterale Bereich 112 des Membranhauptkörpers 110 zwischen wenigstens einer einem Antrieb 400 zugeordneten Komponente 410, beispielsweise einem Gehäuse, und einem Ventilkörper 300 verspannt und festgelegt, wohingegen der innere Bereich 114 des flexiblen Membranhauptkörpers 110 bewegt wird. Die Ventilmembran 100 verschließt also eine Öffnung des Ventilkörpers 300, welche zu dem Ventilsitz 310 führt.

Die Antriebskomponente 200 ist im Beispiel als ein Kompressor oder ein Druckstück ausgebildet, wobei die Antriebskomponente 200 wenigstens eine der Ventilmembran 100 zugewandte Kontaktfläche 202 aufweist, welche zu einem Schließen des Membranventils 2 die Ventilmembran 100 in Richtung des feststehenden Ventilsitzes 310 des Ventilkörpers 300 drückt. Alternativ kann auch ein separates Druckstück vorgesehen werden.

Der zu einer Bewegung der Antriebskomponente 200 entlang der Stellachse S eingerichteter Antrieb 400 bewegt zur Montage oder Demontage der Ventilmembran 100 die Antriebskomponente 200 in eine vorab bestimmte Montageposition.

Die Antriebseinheit bzw. der Antrieb 400 ist beispielsweise als Elektroantrieb, Pneumatikantrieb oder Handantrieb ausgebildet. Der Antrieb 400 ist über eine ein- oder mehrteilige Ventilstange 420, welche sich gemäß einem Doppelpfeil 422 entlang der Stellachse S bewegen lässt, mit der Antriebskomponente 200 verbunden. In anderen Worten ist der Antrieb 400 an einem in Richtung Ventilkörper 300 zeigenden distalen Ende der Ventilstange 420 angeordnet. Zur Anordnung an der Ventilstange 420 umfasst die Antriebskomponente 200 eine Schnittstelle 290, um eine Moment von der Ventilstange 420 auf die Antriebskomponente 200 zu übertragen.

Der Antrieb 400 ist im Betrieb feststehend zum Ventilkörper 300 angeordnet, um die Ventilmembran 100 zum Öffnen und Schließen des Membranventils 2 von den Ventilsitz 310 weg zu bewegen oder auf den Ventilsitz 310 zu zu bewegen. Wird die Membran 100 auf den Ventilsitz 310 gedrückt, so wird der Fluss des Prozessfluids zwischen wenigstens zwei Kammern des Ventilkörpers 300 unterbrochen.

Der Ventilkörper 300 umfass also den Ventilsitz 310, welcher gemeinsam mit der Ventilmembran 100 und deren Stellung einen wirksamen Durchfluss eines entlang einer Hauptflussrichtung H fließenden Prozessfluids durch das Membranventil 2 begrenzt.

Der Montagepfad M verläuft außerhalb einer gedachten Ebene, welche die Hauptflussrichtung H und die Stellachse S miteinander aufspannen.

Die Hauptflussrichtung ergibt sich im Wesentlichen aus den Richtungen der Zu- und Abstrombereiche des Ventilsitzes 310. Beispielsweise liegt die Hauptflussrichtung lotrecht zum stegartigen Verlauf des Ventilsitzes 310. Die gedachte Ebene, die die Hauptflussrichtung H und die Stellachse S aufspannen, liegt in der Figur 1 in der Zeichenebene. Damit liegt der Montagepfad M außerhalb der Zeichenebene der Figur 1.

Der stegartige und abschnittsweise gekrümmt und linienförmig verlaufende Ventilsitz 310 und der Montagepfad M liegen in einer gemeinsamen gedachten Ebene.

Ein erster Abschnitt 242 der zweiten Innenkontur 240 stellt im betriebsbereiten Zustand der Ventilmembran 100 eine Führung für einen gegenüber dem Kopf 130 des Membranstiftes 120 verjüngten Abschnitt 142 des Halses 140 des Membranstiftes 120 bereit. Ein zweiter Abschnitt 244 der zweiten Innenkontur 240 stellt im betriebsbereiten Zustand der Ventilmembran 100 eine Führung für einen gegenüber dem verjüngten Abschnitt 142 des Halses 140 aufgeweiteten Abschnitt 144 des Halses 140 des Membranstifts 120 bereitstellt. In dem betriebsbereiten Zustand der Ventilmembran 100 ist die Ventilmembran 100 in Bezug zu der Antriebskomponente 200 montiert. In dem betriebsbereiten Zustand der Ventilmembran 100 bzw. in deren montiertem Zustand fallen eine Mittenlängsachse des Membranstifts 120 und die Stellachse S zusammen.

Eine parallel zur Stellachse S verlaufende Länge L_142 des verjüngten Abschnitts 142 des Halses 140 größer ist als ein Abstand D_244 zwischen einer proximalen Öffnung 222 des Durchgangs 220 und dem ersten Abschnitt 242 der zweiten Innenkontur 240. Damit ergibt sich ein gewünschtes Spiel zwischen dem Membranstift 120 und der Antriebskomponente 200, um beispielsweise einen Toleranzausgleich für das Membranmaterial bereitzustellen und um weitergehend voneinander unterschiedliche Kraftübertragungsflächen für jeweilige Bewegungsrichtung der Antriebskomponente 200 zu wählen.

Die erste Innenkontur 230 folgt zumindest abschnittsweise einer gedachten Innenzylindermantelfläche eines gedachten Zylinders mit dem Montagepfad M als Zylinderachse. Die zweite Innenkontur 240 folgt zumindest abschnittsweise einer gedachten Innenzylindermantelfläche eines gedachten Zylinders mit der Stellachse S als Zylinderachse.

Der Kopf 130 des Membranstifts 120 weist wenigstens eine distale und laterale Einführschräge 132 auf, welche beim Einführen des Kopfes 130 in den Durchgang auf einen Übergangsbereich 232 zwischen der ersten Innenkontur 230 und der zweiten Innenkontur 240 trifft und dadurch eine Verschwenkung des Membranstiftes 120 in Richtung des Montagepfads M,. insbesondere der Montageachse, bewirkt.

Der Übergangsbereich 232 verläuft im Beispiel lotrecht zur Stellachse S. Der Übergangsbereich 232. Eine Aufweitung 234 des lichten Durchmessers der ersten Kontur 230 in Abweichung von der zylindrischen Form vereinfacht die Einführung des Kopfes 130 in einer gegenüber der Stellachse S verkippten Stellung.

Die Ventilmembran 100 und die die um die Antriebskomponente 200 herum angeordnete wenigstens eine Komponente 410 weisen eine jeweilige Kodierung auf, welche den Verlauf des MontagepfadsM indiziert. Eine Führung bzw. ein Führungselement der Antriebskomponente 200 legt deren Rotationsposition in Bezug zur Stellachse S eindeutig fest. Beispielsweise ist eine einzige oder eine hervorgehobene Lasche der Membran in einer entsprechenden Ausnahme der um die Antriebskomponente herum angeordnete Komponente angeordnet. Die Lasche und die Ausnahme zeigen in eine Richtung, welche von der ersten Kontur der Membran weggewandt angeordnet ist. In der Zusammenschau mit einer entsprechenden Anleitung ist für den Monteur dann klar, dass an der Seite der Lasche gezogen werden muss, um des Membranstifts in den Montagepfad Mzu überführen. Ggf. kann auf der der Lasche gegenüberliegenden Seite noch gedrückt werden, um die Verschwenkung des Membranstifts in den Montagepfadzu unterstützen.

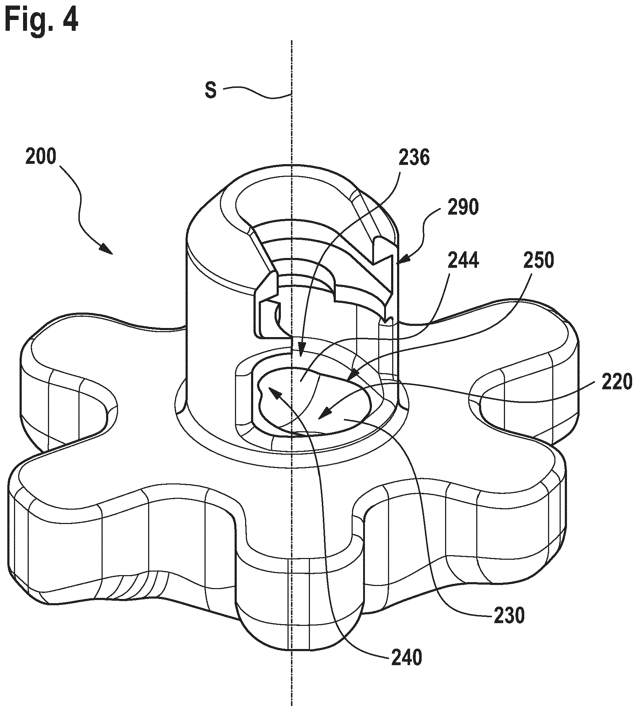

Figur 4 zeigt die Antriebskomponente in einer perspektivischen Darstellung. Tritt der Kopf 130 des Membranstifts 120 über eine Kante 250, welche von der Öffnung 222 des Durchgangs 220 und der ersten Kontur 230 begrenzt wird, so lässt sich der Membranstift 120 aus dem MontagepfadM in die Stellachse S bewegen.

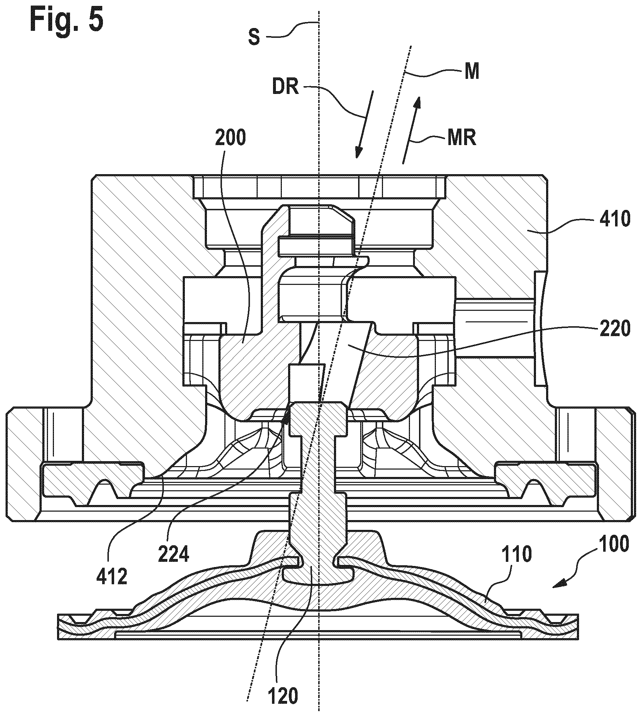

Figuren 5 bis 8 zeigen jeweils einen Zustand bei der Montage oder Demontage der Ventilmembran. Die Montageposition der Antriebskomponente 200 korrespondiert mit einer geöffneten Position des Membranventils 2. In anderen Worten: Die Antriebskomponente 200 wird mittels der Antriebsstange 420 in die Montageposition entlang der Stellachse S bewegt, in welcher das Membranventil 2 in einem zusammengebautem Betriebs-Zustand geöffnet wäre, also die Ventilmembran 100 und der Ventilsitz einen Raum freigeben, durch den das Prozessfluid fließen kann. Selbstverständlich muss die voran genannte geöffnete Position nicht zwangsweise mit einer fest definierten Betriebs-Öffnungsposition des Membranventils 2 übereinstimmen. Vielmehr reicht es aus, dass der Antrieb 500 eine Position der Antriebskomponente 200 anfährt, in welcher das Membranventil 2 sich - wieder den zusammengebauten Zustand vorausgesetzt - in einer geöffneten Position oder geöffneten Zwischenposition befindet.

Die dem Antrieb 500 zugeordneten Komponenten, welche zum einen die Führung der Antriebskomponente 200 und die Anlage und Verspannung der Ventilmembran 100 bereitstellen, werden gemeinsam als Komponente 410 bezeichnet.

Aus Gründen der besseren Übersicht sind der Ventilkörper 300 und die Antriebsstange 420 in den Figuren 5 bis 8 nicht gezeigt. Es wird insbesondere darauf verwiesen, dass die Figuren 5 bis 8 den Montage- bzw. Demontageprozess der Ventilmembran 100 illustrieren, währenddessen der Ventilkörper 300 bereits nicht mehr mit der antriebsseitigen Komponente 410 verbunden ist. Beispielsweise wird zur Demontage der Ventilmembran 100 zuvor der Ventilkörper 300 von der antriebsseitigen Komponente 410 entfernt.

Eine um die Antriebskomponente 200 herum angeordnete antriebsseitige Komponente 410 umfasst eine Gegenkontur 412. Der Membranhauptkörper 110 liegt während der Hindurchführung des Kopfes 130 des wenigstens einen Membranstifts 120 durch den Durchgang 220 während der Montage oder der Demontage der Ventilmembran 100 zumindest abschnittsweise unter Verformung an der Gegenkontur 112 an.

Die Gegenkontur 412 ist feststehend angeordnet, wohingegen die Antriebskomponente 200 entlang der Stellachse S mittels des Antriebs 500 bewegbar ist. Die Gegenkontur 412 ist in Bezug zur Stellachse S radial außerhalb bezüglich einer inneren Führungskontur für die Antriebskomponente 200 angeordnet.

Der Membranhauptkörper 110 ist im Beispiel in einer geöffneten Position hergestellt, was bedeutet, dass dieser nach einer Verformung wieder in seine Ursprungsform zurückkehrt. Um die Ventilmembran 100 mit der Antriebskomponente 200 zu verbinden oder die Verbindung zu lösen, wird der Membranhauptkörper 110 während seines abschnittsweisen Anliegens an der Gegenkontur 412 verformt. Erst durch diese Verformung ist es möglich, den Membranstift 120 in Bezug zur Stellachse S zu verkippen bzw. verschwenken bzw. zu rotieren, um diesen entlang des Montagepfads M durch den Durchgang zu führen.

Im Falle der Montage führt die Eigenspannung des Membranhauptkörpers 110 dafür, dass nach dem Durchführen des Kopfes 130 der Kopf 130 durch die durch die Eigenspannung des Membranhauptkörpers 110 erzeugte Rückstellkraft in Richtung der Stellachse S verschwenkt bzw. rotiert wird.

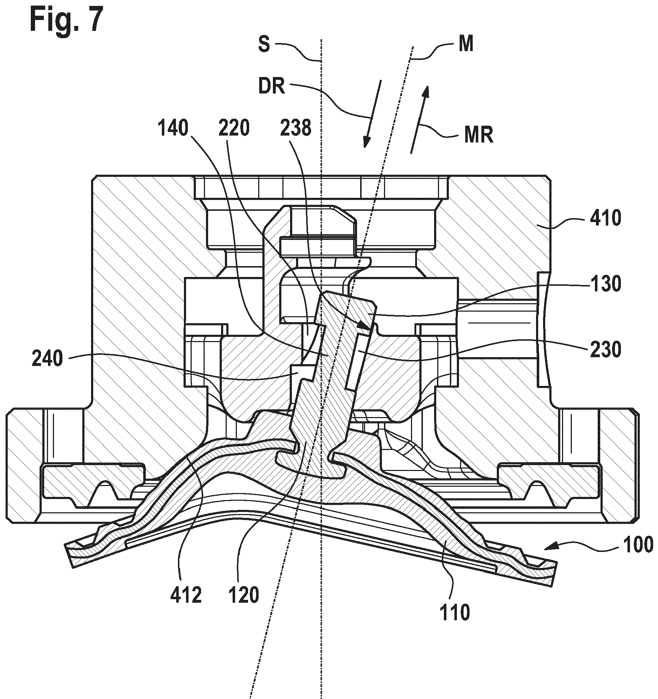

Im Falle der Demontage muss die Eigenspannung des Membranhauptkörpers 110 durch den Monteur überwunden werden, so dass der Kopf 130 in den Montagepfad M verschwenkt bzw. rotiert werden kann. Der Kopf 130 trifft, wie in Figur 7 gezeigt, während des Verschwenkens aus der Stellachse S heraus auf einen Anschlag 238 und ist in der so eingenommenen Position bereit, um durch den Durchgang 220 hindurch geführt zu werden.

Das Verschwenken der Ventilmembran 100 findet beispielsweise in der Nähe des Schnittpunkts der Stellachse S mit dem Montagepfad M statt.

Der Membranstift 120 ist ausziehsicher in dem Membranhauptkörper 110 angeordnet. Der Membranstift 120 ist beispielsweise aus einer Metalllegierung gefertigt, wohingegen der Membranhauptkörper 110 beispielsweise aus einem Elastomermaterial gefertigt ist. Nicht dargestellt sind zweiteilige Ventilmembrane, bei denen der Membranstift in einem in Richtung Ventilkörper angeordneten Schild angeordnet ist oder lediglich ein Schild die Ventilmembran in Richtung Nassseite abschließt.

In Figur 5 ist eine Anfangssituation zum Einknüpfen des Membranstifts 120 gezeigt. Der Membranstift 120 wird entlang der Stellachse S durch die Öffnung 224 in den Durchgang 220 eingeführt.

Der Durchgang 220 erstreckt sich von der der Ventilmembran 100 zugewandten Öffnung 224 durch die Antriebskomponente 200 hindurch bis zu der von der Ventilmembran 100 abgewandten Öffnung 222.

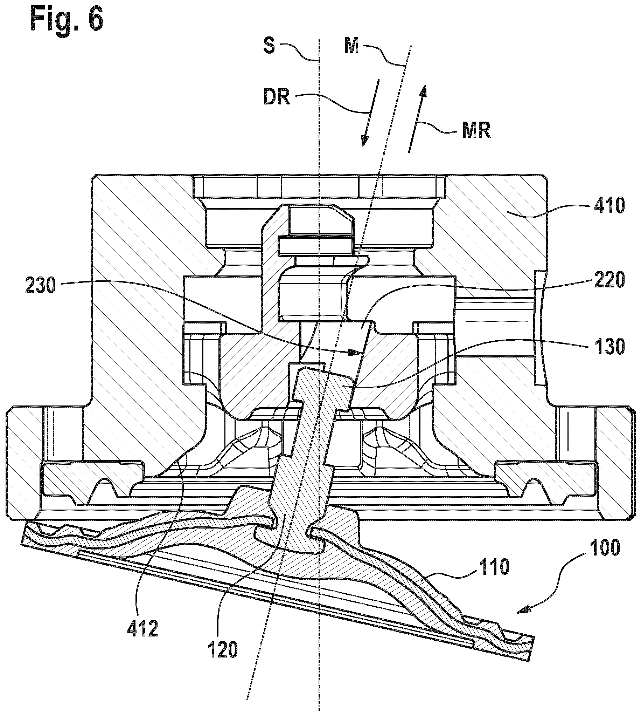

Nach dem Einbringen des Kopfes 130 in einen Eingangsbereich des Durchgangs 220 wird der Membranstift 120 in den Montagepfad M verschwenkt, was in Figur 6 gezeigt ist. Damit ist die zylindrisch ausgestaltete Außenwand des Kopfes 130 so ausgerichtet, dass der Kopf 130 entlang des Montagepfads M geführt durch die erste Kontur 230 durch den Durchgang 220 hindurchgeführt werden kann. Der Monteur drückt also auf die verschwenkte Membran 100 bevorzugt entlang des Montagepfads M in eine Montagerichtung MR.

In Figur 6 ist erkennbar, dass ein zu der Mittenlängsachse des Membranstiftes 120 lotrechter Außenquerschnitt des Kopfes 130 des Membranstiftes 120 derart auf einen mit der ersten Innenkontur 230 assoziierten Innenquerschnitt der Durchgangsöffnung 220 der Antriebskomponente 200 abgestimmt ist, so dass der Kopf 130 entlang des Montagepfads M durch die Durchgangsöffnung 220 führbar ist.

In Figur 6 ist dargestellt, dass ein zu der Mittenlängsachse des Membranstiftes 120 lotrecht verlaufender Außenquerschnitt des Halses 140 derart auf wenigstens einen mit der zweiten Innenkontur 240 assoziierten Innenquerschnitt der Durchgangsöffnung 220 abgestimmt ist, so dass der Hals 140 des Membranstiftes 120 entlang der Stellachse S in der Durchgangsöffnung 220 aufnehmbar ist. Damit fallen in dem gezeigten Betriebszustand der Membran 100 die Mittenlängsachse des Membranstifts 120 und die Stellachse S zusammen.

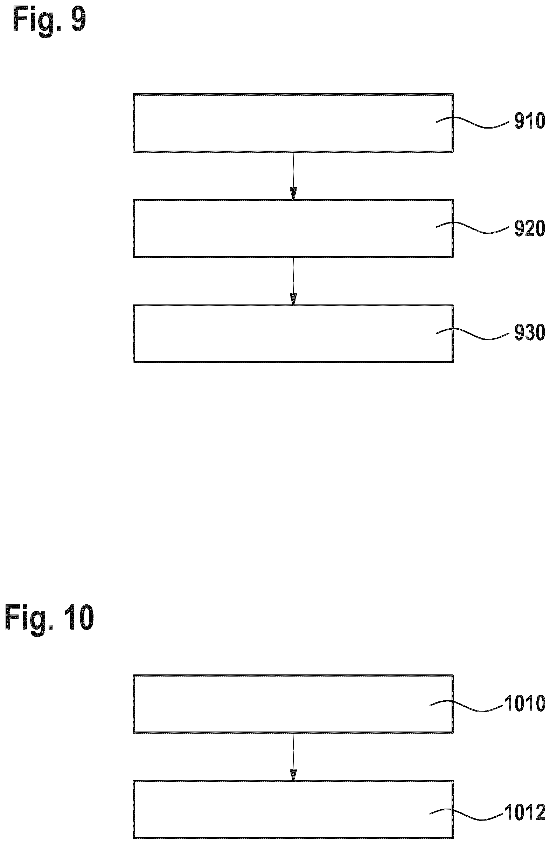

In Figur 7 ist eine Situation dargestellt, in der der Kopf 130 die hier nicht sichtbare Kante 250 erreicht hat. Nach dem Überschreiten dieser Kante 250 durch den Kopf 130 des Membranstifts 120 ist es möglich, den Membranstift 120 in Richtung Stellachse S zu schwenken. Insbesondere bei der dargestellten Montageposition der Antriebskomponente 200 entlang der Stellachse S liegen Teile der Ventilmembran 100 an der wenigstens einen Komponente 410 und an der Antriebskomponente 200 an und werden gestaucht. Dieses Verformen bzw. Stauchen bewirkt eine auf den Membranstift 120 in wirkende Gegenkraft, welche ein Einschnappen des Kopfes 130 aus der in Figur 9 gezeigten Situation in Richtung Stellachse S bewirkt. Folglich unterstützt eine Eigenspannung der Ventilmembran 100 das Verschwenken des Membranstiftes 120 in Richtung Stellachse S. Hierdurch erhält der Monteur ein haptisches Feedback bei der Montage der Ventilmembran 100.

Im Beispiel ist die Ventilmembran 100 in geöffneter Position hergestellt. Die Eigenspannung der so hergestellten Ventilmembran 100 bewirkt, dass, wenn der Membranstift 120 schräg gestellt wird, dass der Membranrücken auf die Gegenkontur 410 trifft und die Ventilmembran 100 verformt wird. Dadurch baut sich eine Spannung innerhalb der Ventilmembran 100 auf, welche die Ventilmembran 100 wieder in die ursprünglich Form zwingt, was aber durch die Schrägführung des Membranstifts 120 in dem Durchgang 220 zunächst verhindert wird. Erst wenn der Kopf 130 des Membranstifts 120 den Durchgang 220 passiert hat, wird der Membranstift 120 durch die Spannung innerhalb des Membrankörpers in Richtung Stellachse S verschwenkt.

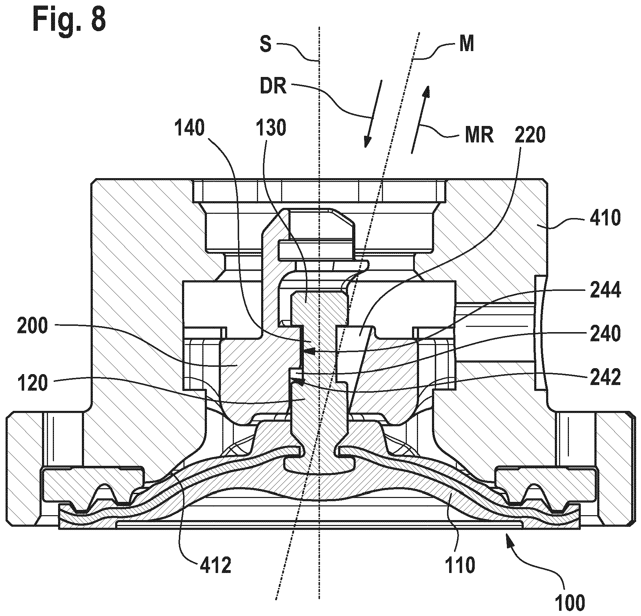

In Figur 8 ist die betriebsbereite Position der Ventilmembran 100 gezeigt. In dieser betriebsbereiten Position ist der Kopf 130 nicht mehr im Durchgang 220 angeordnet. Vielmehr stellt die wenigstens eine zweite zur Stellachse S parallel verlaufende Kontur 240 eine Führungskontur für den Hals 140 des Membranstifts 120 bereit.

Figuren 9 und 10 zeigen jeweils ein schematisches Ablaufdiagramm zur Montage und Demontage der Ventilmembran 100 aus den vorigen Figuren.

Das Montage-Verfahren zum Anordnen einer Ventilmembran 100 eines Membranventils 2 gemäß Figuren 5 und 9 umfasst ein Einführen 910 des Kopfes 130 in eine Öffnung 224 der Antriebskomponente 200. Die Öffnung 224 führt in den Durchgang 220 der Antriebskomponente 200 führt.

Weitergehend umfasst das Montage-Verfahren gemäß den Figuren 6, 7 und 9 ein Hindurchführen 920 des Kopfes 130 durch den Durchgang 220 der Antriebskomponente 200 in die von der Membranseite der Antriebskomponente 200 wegweisenden Montagerichtung MR, wobei die Mittenlängsachse des Membranstiftes 120 und der Montagepfad M bei dem Hindurchführen 920 wenigstens zeitweise zusammenfallen.

Nach dem Hindurchführen 920 erfolgt gemäß dem Übergang zwischen den in Figuren 7 und 8 gezeigten Zuständen und gemäß Figur 9 ein Verschwenken 930 des Membranstiftes 120 aus dem Montagepfad M in die Stellachse S. Bei dem Verschwenken 930 taucht der Hals 140 des Membranstifts 120 in wenigstens einen Aufnahmeraum 243, 245 des Durchgangs 220 ein. Nach dem Verschwenken 930 des Membranstifts 120 sind eine proximale Anlagefläche 136 des Kopfes 130 und eine Gegenfläche 236 der Antriebskomponente 200 so zueinander angeordnet, dass bei einer Bewegung der Antriebskomponente 200 in eine Richtung entgegen der Ventilmembran 100 die Gegenfläche 236 und die Anlagefläche 136 so aneinander liegen, dass mittels der Gegenfläche 236 und mittels der Anlagefläche 136 ein von dem Antrieb 400 bereitgestelltes Zugmoment von der Antriebskomponente 200 in den Membranstift 120 eingebracht wird. Der Aufnahmeraum 423, 425 wird durch den Abschnitt 242, 244 der zweiten Kontur 240 begrenzt.

Das Demontage-Verfahren zum Entfernen einer Ventilmembran 100 von einem Membranventil 2 ist in Figur 10 dargestellt.

Das Verfahren umfasst ein Verschwenken 1020 des Membranstiftes 120 aus der Stellachse S des Membranventils 2 in den Montagepfad M. Bei dem Verschwenken 1020 wird der Hals 140 des Membranstifts 120 zumindest abschnittsweise aus einem Aufnahmeraum 243, 245 des Durchgangs 220 herausbewegt. Nach dem Verschwenken 1020 des Membranstifts 120 sind eine Anlagefläche 136 des Kopfes 130 und eine Gegenfläche 236 der Antriebskomponente 200 derart voneinander entkoppelt, so dass der Kopf 130 durch den Durchgang 220 hindurchgeführt werden kann.

Es erfolgt also ein Hindurchführen 1030 des Kopfes 130 des Membranstiftes 120 durch den Durchgang 220 der Antriebskomponente 200 in einer zu der Membranseite der Antriebskomponente 200 hin weisenden Demontagerichtung DR, wobei eine Mittenlängsachse des Membranstiftes 120 und der Montagepfad M, insbesondere im Fall der Montageachse, bei dem Hindurchführen 1030 wenigstens zeitweise zusammenfallen.

## Patentansprüche

1. Ein Membranventil (2) zum Stellen oder Regeln eines Prozessfluids, das Membranventil (2) umfassend:
eine Ventilmembran (100) mit einem Membranhauptkörper (110) und wenigstens einem von dem Membranhauptkörper (110) abragenden Membranstift (120), wobei der Membranstift (120) einen Kopf (130) und einen sich vom Kopf (130) in Richtung des Membranhauptkörpers (110) erstreckenden Hals (140) umfasst; und
eine entlang einer gedachten Stellachse (S) des Membranventils (2) bewegbare Antriebskomponente (200) mit einem Durchgang (220), wobei, insbesondere zur Hindurchführung des Kopfes (130) des wenigstens einen Membranstifts (120) durch den Durchgang (220) während einer Montage oder einer Demontage der Ventilmembran (100), wenigstens eine Innenkontur (230) des Durchgangs (220) zumindest abschnittsweise parallel zu einem von der Stellachse (S) abweichenden gedachten Montagepfad (M) verläuft.

2. Das Membranventil (2) gemäß dem Anspruch 1, wobei der Montagepfad (M) eine zu einer zu der Stellachse (S) schräg gestellte Montageachse ist.

3. Das Membranventil (2) gemäß dem Anspruch 1 oder 2, wobei, insbesondere zur Aufnahme des Halses (140) innerhalb des Durchgangs (220) während eines betriebsbereiten Zustandes der Ventilmembran (100), wenigstens eine weitere Innenkontur (240) des Durchgangs (220) parallel zur Stellachse (S) verläuft.

4. Das Membranventil (2) gemäß einem der vorigen Ansprüche, wobei bei einem Montagevorgang der Ventilmembran (100) der Kopf (130) des Membranstifts (120) entlang der parallel zum gedachten Montagepfad (M) verlaufenden Innenkontur (230) des Durchgangs (220) durch den Durchgang (220) hindurch führbar ist, und wobei bei dem Montagevorgang der Ventilmembran (100) der Hals (140) des Membranstiftes (120) nach einem Austreten des Kopfes (130) des Membranstiftes (120) aus dem Durchgang (220) in Richtung der abschnittsweise parallel zur Stellachse (S) verlaufenden weiteren Innenkontur (240) verschwenkbar ist, insbesondere aus der Montagesachse (M) heraus in Richtung der Stellachse (S) verschwenkbar ist.

5. Das Membranventil (2) gemäß einem der vorigen Ansprüche, wobei die Antriebskomponente (200) ein Kompressor oder ein Druckstück ist, und wobei die Antriebskomponente (200) wenigstens eine der Ventilmembran (100) zugewandte Kontaktfläche (202) aufweist, welche zu einem Schließen des Membranventils (2) die Ventilmembran (100) in Richtung eines feststehenden Ventilsitzes (310) eines Ventilkörpers (300) drückt.

6. Das Membranventil (2) gemäß einem der vorigen Ansprüche, wobei das Membranventil (2) umfasst:
einen zu einer Bewegung der Antriebskomponente (200) entlang der Stellachse (S) eingerichteten Antrieb (400), wobei der Antrieb (400) zur Montage oder Demontage der Ventilmembran (100) die Antriebskomponente (200) in eine Montageposition bewegt.

7. Das Membranventil (2) gemäß dem vorigen Anspruch, wobei die Montageposition der Antriebskomponente (200) mit einer geöffneten Position des Membranventils (2) korrespondiert.

8. Das Membranventil (2) gemäß dem Anspruch 6 oder 7, wobei eine um die Antriebskomponente (200) herum angeordnete antriebsseitige Komponente (410) eine Gegenkontur (412) umfasst, wobei der Membranhauptkörper (110) während der Hindurchführung des Kopfes (130) des wenigstens einen Membranstifts (120) durch den Durchgang (220) während der Montage oder der Demontage der Ventilmembran (100) zumindest abschnittsweise unter Verformung an der Gegenkontur (112) der antriebsseitigen Komponente (410) anliegt.

9. Das Membranventil (2) gemäß einem der vorigen Ansprüche, wobei das Membranventil (2) umfasst:
einen Ventilkörper (300) mit wenigstens einem Ventilsitz (310), welcher gemeinsam mit der Ventilmembran (100) und deren Stellung einen wirksamen Durchfluss eines entlang einer Hauptflussrichtung (H) fließenden Prozessfluids durch das Membranventil (2) begrenzt;
wobei der Montagepfad (M) außerhalb einer gedachten Ebene verläuft, welche die Hauptflussrichtung (H) und die Stellachse (S) miteinander aufspannen.

10. Das Membranventil (2) gemäß dem vorigen Anspruch, wobei der stegartige und zumindest abschnittsweise gekrümmt und linienförmig verlaufende Ventilsitz (310) und der Montagepfad (M) in einer gemeinsamen gedachten Ebene liegen.

11. Das Membranventil (2) gemäß einem der vorigen Ansprüche, wobei ein erster Abschnitt (242) der weiteren Innenkontur (240) im betriebsbereiten Zustand der Ventilmembran (100) eine Führung für einen gegenüber dem Kopf (130) des Membranstiftes (120) verjüngten Abschnitt (142) des Halses (140) des Membranstiftes (120) bereitstellt, und wobei ein zweiter Abschnitt (244) der weiteren Innenkontur (240) im betriebsbereiten Zustand der Ventilmembran (100) eine Führung für einen gegenüber dem verjüngten Abschnitt (142) des Halses (140) aufgeweiteten Abschnitt (144) des Halses (140) des Membranstifts bereitstellt.

12. Eine entlang einer gedachten Stellachse (S) eines zum Stellen eines Prozessfluids ausgebildeten Membranventils (2) bewegbare Antriebskomponente (200) mit einem Durchgang (220), wobei, insbesondere zur Hindurchführung eines Kopfes (130) wenigstens eines Membranstifts (120) einer Ventilmembran (100) durch den Durchgang (220) während einer Montage oder einer Demontage der Ventilmembran (100), eine Innenkontur (230) des Durchgangs (220) zumindest abschnittsweise parallel zu einem von der Stellachse (S) abweichenden gedachten Montagepfad (M) verläuft.

13. Die Antriebskomponente (220) gemäß dem Anspruch 12, wobei die Antriebskomponente (220) zur Verwendung in dem Membranventil (2) gemäß einem der Ansprüche 1 bis 15 ausgebildet ist.

14. Ein Montage-Verfahren zum Anordnen einer Ventilmembran (100) eines zum Stellen eines Prozessfluids ausgebildeten Membranventils (2) umfassend:
Einführen (910) eines Kopfes (130) eines von einem Membranhauptkörper (110) der Ventilmembran (100) abragenden Membranstiftes (120) in eine Öffnung (224) einer entlang einer Stellachse (S) des Membranventils (2) beweglichen Antriebskomponente (200), wobei die Öffnung (224) in einen wenigstens abschnittsweise entlang eines Montagepfads (M) verlaufenden Durchgang (200) der Antriebskomponente (200) führt, und wobei der Montagepfad (M) schräg zur Stellachse (S) verläuft;
Hindurchführen (920) des Kopfes (130) des Membranstiftes (120) durch den Durchgang (220) der Antriebskomponente (200) in einer von der Membranseite der Antriebskomponente (200) wegweisenden Montagerichtung (MR), wobei eine Mittenlängsachse des Membranstiftes (120) und der Montagepfad (M) bei dem Hindurchführen (920) wenigstens zeitweise zusammenfallen; und
Verschwenken (930) des Membranstiftes (120) aus dem Montagepfad (M) in die Stellachse (S), wobei bei dem Verschwenken (930) ein sich vom Kopf (130) des Membranstifts (120) in Richtung Membranhauptkörper (110) erstreckender Hals (140) des Membranstifts (120) in wenigstens einen Aufnahmeraum (243, 245) des Durchgangs (220) eintaucht, und wobei nach dem Verschwenken (930) des Membranstifts (120) eine proximale Anlagefläche (136) des Kopfes (130) und eine Gegenfläche (236) der Antriebskomponente (200) so zueinander angeordnet sind, dass bei einer Bewegung der Antriebskomponente (200) in eine Richtung entgegen der Ventilmembran (100) die Gegenfläche (236) und die Anlagefläche (136) so aneinander liegen, dass mittels der Gegenfläche (236) und mittels der Anlagefläche (136) ein Zugmoment von der Antriebskomponente (200) in den Membranstift (120) eingebracht wird.

15. Ein Demontage-Verfahren zum Entfernen einer Ventilmembran (100) von einem zum Stellen eines Prozessfluids ausgebildeten Membranventil (2), das Verfahren umfassend:
Verschwenken (1020) eines Membranstiftes (2), welcher von einem Membranhauptkörper (110) der Ventilmembran (100) abragt, aus einer Stellachse (S) des Membranventils (2) in einen Montagepfad (M), wobei der Montagepfadf (M) schräg zur Stellachse (S) verläuft, wobei bei dem Verschwenken (1020) ein sich von einem Kopf (130) des Membranstifts (120) in Richtung Membranhauptkörper (110) erstreckender Hals (140) des Membranstifts (120) zumindest abschnittsweise aus einem Aufnahmeraum (243, 245) des Durchgangs (220) herausbewegt wird, und wobei nach dem Verschwenken (1020) des Membranstifts (110) eine Anlagefläche (136) des Kopfes (130) und eine Gegenfläche (236) der Antriebskomponente (200) derart voneinander entkoppelt sind, so dass der Kopf (130) durch den Durchgang (220) hindurchgeführt werden kann; und
Hindurchführen (1030) des Kopfes (130) des Membranstiftes (120) durch den Durchgang (220) der Antriebskomponente (200) in einer zu der Membranseite der Antriebskomponente (200) hin weisenden Demontagerichtung (DR), wobei eine Mittenlängsachse des Membranstiftes (120) und der Montagepfad (M) bei dem Hindurchführen (1030) wenigstens zeitweise zusammenfallen.
